# FASCICULE DE BREVET EUROPEEN

(11) **EP 3 568 316 B1**
(45) Date de publication et mention de la délivrance du brevet: **01.09.2021**
(21) Numéro de dépôt: 17828991.4
(22) Date de dépôt: 21.12.2017
(51) Int. Cl.: B60N 2/58, B60N 2/60, B60N 2/68, B60N 2/36

(54) **DOSSIER DE BANQUETTE ARRIERE DE VEHICULE AUTOMOBILE DOTE D'UNE PLAQUE DE RIGIDIFICATION**
RÜCKENLEHNE EINER RÜCKSITZBANK EINES KRAFTFAHRZEUGS MIT EINER VERSTÄRKUNGSPLATTE
BACKREST OF A REAR SEAT BENCH OF AN AUTOMOTIVE VEHICLE COMPRISING A REINFORCING PANEL

(30) Priorité: 12.01.2017 FR 1750254
(43) Date de publication de la demande: 20.11.2019
(73) Titulaire: PSA Automobiles SA, 78300 Poissy (FR)
(72) Inventeur: COTTA, Gerald, 78450 Villepreux (FR); THOMAS, Karen, 91140 Villebon sur Yvette (FR); PINTO TEIXEIRA, Frederic, 91160 Ballainvilliers (FR)
(86) Numéro de dépôt international: PCT/FR2017/053756
(87) Numéro de publication internationale: WO 2018/130755

(56) Documents cités:
- JP-A- H08 256 874
- US-A1- 2012 319 448
- US-A1- 2014 042 792

## Description

### Domaine de l'invention

La présente invention se rapporte d'une manière générale aux banquettes arrière de véhicules automobiles.

Elle concerne plus particulièrement un dossier d'une telle banquette arrière.

### Arrière-plan de l'invention

Les véhicules automobiles sont généralement équipés dans la partie arrière de leur habitacle, d'une banquette arrière comportant un ou plusieurs dossiers montés articulés à pivotement sur la structure du véhicule autour d'un axe disposé suivant la direction transversale de ce véhicule entre une position relevée, légèrement inclinée vers l'arrière par rapport à la verticale, et une position rabattue sensiblement à l'horizontale permettant d'augmenter le volume du compartiment à bagages.

Chaque dossier comporte classiquement une armature dont la face avant supporte une matelassure généralement en mousse et destinée à apporter un confort postural à l'occupant.

L'armature et la matelassure sont recouverts extérieurement d'un habillage ou coiffe en matière textile, en cuir ou en simili en fonction du rendu souhaité.

On connait un premier type d'armature de dossier arrière comportant un panneau de tôle obtenu par emboutissage et un cadre métallique rigide fixé sur la périphérie interne de la tôle.

Ce type d'armature présente toutefois une masse importante et un coût de revient élevé, notamment du fait du procédé d'obtention par emboutissage de la plaque de tôle.

Afin de limiter la masse et de réduire les coûts de revient sans toutefois nuire ni au confort, ni à la sécurité des occupants, d'autres types d'armatures de dossier ont été mises au point ces dernières années.

Un clip qui accroche, et fixe ainsi, un couvercle d'un siège sur une structure de cadre comprend une partie de connexion de couvercle qui est connectée intégralement au couvercle; une partie de crochet en forme de crochet qui s'accroche à, et se fixe ainsi à, la structure de cadre; et une partie de couverture plane qui est formée dans une position faisant face à une partie arrière de la partie de crochet. Une ouverture qui permet à la partie arrière de la partie crochet d'être visible est formée dans la partie de couverture.

Dans l'état de la technique, le brevet US2014042792 décrit un clip permettant d'accrocher et fixer un couvercle d'un siège sur une structure de cadre comprenant un système de connexion du couvercle. Un système de crochet en forme de crochet s'accroche à, et se fixe à la structure du cadre et une partie de couverture plane formée dans une position faisant face à une partie arrière de la partie de crochet. Une ouverture permet à la partie arrière de la partie crochet d'être visible est formée dans ladite couverture. Le brevet JBH08256874 décrit un dossier de siège de véhicule, sur lequel la partie arrière forme une face bosselée, Un panneau arrière est fixé aux fils d'un cadre de dossier de siège, la face arrière du panneau arrière est recouverte par une partie de couvercle arrière cousue à l'arrière d'un couvercle du dossier de siège. Le brevet US2012319448 décrit un siège de véhicule comprenant un panneau arrière fixé à une surface arrière d'un dossier de siège, un matériau de peau recouvrant une surface arrière du panneau arrière, et un clip fixant le panneau arrière à une partie du corps du dossier de siège. L'agrafe comprend intégralement une partie d'engagement de planche qui peut être engagée avec le panneau, une partie d'engagement de siège qui peut être engagée avec la partie de corps du dossier de siège, et une partie d'engagement avec la peau qui peut être engagée avec le matériau de peau. Le matériau de la peau et le panneau sont fixés à la partie du corps du dossier de siège par l'agrafe.

Il est ainsi également connu, notamment de la demande française de brevet FR 3 016 835, de réaliser une telle armature de dossier à partir d'un cadre métallique rigide et d'un réseau de fils d'acier verticaux et horizontaux s'étendant entre les deux montants et entre les deux traverses de ce cadre.

Lorsque le dossier est positionné en configuration rabattue à l'horizontale pour augmenter le volume de chargement du véhicule et qu'un usager introduit une lourde charge supportée au moins partiellement par ce dossier, les fils métalliques de son armature ont tendance à se déformer sous le poids de cette charge.

Bien que temporaire (les fils métalliques reprenant leur forme initiale lors du retrait de la charge), ce phénomène de déformation du dossier a un impact négatif sur le niveau de qualité perçue par cet usager.

### Objet et résumé de l'invention

La présente invention vise donc à proposer un tel dossier de banquette arrière qui soit économe à la fabrication et ne se déforme pas ou quasiment pas sous l'effet de charges importantes lorsqu'il occupe sa configuration rabattue.

Elle propose à cet effet un dossier de banquette arrière de véhicule automobile apte à être monté articulé à pivotement sur la structure dudit véhicule entre une position relevée et une position rabattue sensiblement à l'horizontale, ledit dossier comportant une armature comprenant un cadre métallique et un réseau de fils métalliques s'étendant entre les deux montants et entre les deux traverses dudit cadre, ainsi qu'une matelassure supportée par la partie avant de ladite armature et une coiffe recouvrant extérieurement ladite armature et ladite matelassure ;
comportant en outre une plaque de rigidification maintenue par l'intermédiaire de moyens de maintien contre la face interne du dos de ladite coiffe et venant en appui contre la partie arrière de ladite armature, caractérisé en ce que lesdits moyens de maintien comportent quatre poches triangulaires cousues aux quatre extrémités de la face interne du dos de ladite coiffe et dans lesquelles sont insérés les quatre coins de ladite plaque de rigidification, ou en ce que lesdits moyens de maintien comportent une poche unique cousue sur la périphérie de la face interne du dos de ladite coiffe et enveloppant entièrement ladite plaque de rigidification.

La présence d'une telle plaque intercalée entre le dos de la coiffe et l'armature permet d'améliorer sensiblement la rigidité de la partie arrière du dossier de sorte que ce dernier ne se déforme pas (ou quasiment pas) lorsqu'il est soumis à des charges importantes dans sa configuration rabattue à l'horizontale.

En outre, n'étant pas directement fixée à l'armature métallique, cette plaque peut être réalisée dans n'importe quel type de matériau léger et économique qui présente une rigidité suffisante.

Selon des caractéristiques préférées dudit dossier selon l'invention :
- ladite plaque de rigidification est réalisée en plastique, en carton ou dans un matériau composite à base de bois ;
- ladite plaque de rigidification est réalisée dans un plastique alvéolaire ;
- ladite plaque de rigidification est réalisée en AKILUX® ;
- ladite plaque de rigidification présente une épaisseur comprise entre 2,5 et 6 mm ; et/ou
- les extrémités des fils métalliques constituant ledit réseau sont soudées sur la face arrière dudit cadre, ladite plaque de rigidification vient en appui contre lesdits fils.

L'invention vise également sous un second aspect, une banquette arrière de véhicule automobile comportant au moins deux tels dossiers disposés côte à côte dans le sens de la largeur dudit véhicule.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue de dos en perspective de deux dossiers selon l'invention formant la banquette arrière d'un véhicule automobile;
- la figure 2 est une vue de dessus de l'un des deux dossiers de la banquette de la figure 1, montré avant le repliement et la fermeture du dos de la coiffe sur sa partie avant ;
- la figure 3 représente une vue de dessus du dossier de la figure 2 après repliement du dos de la coiffe sur sa partie avant et avant sa fermeture ; et
- la figure 4 est une vue semblable à la figure 2 d'un dossier de banquette arrière selon une variante de réalisation de l'invention.

### Description détaillée d'un mode préféré de réalisation

Dans la suite de cette description et par convention, les termes les termes « avant », « arrière », « gauche », « droite », « longitudinal » et « transversal » sont définis par rapport à la position de montage d'un dossier de banquette arrière de véhicule automobile dans l'habitacle de ce véhicule.

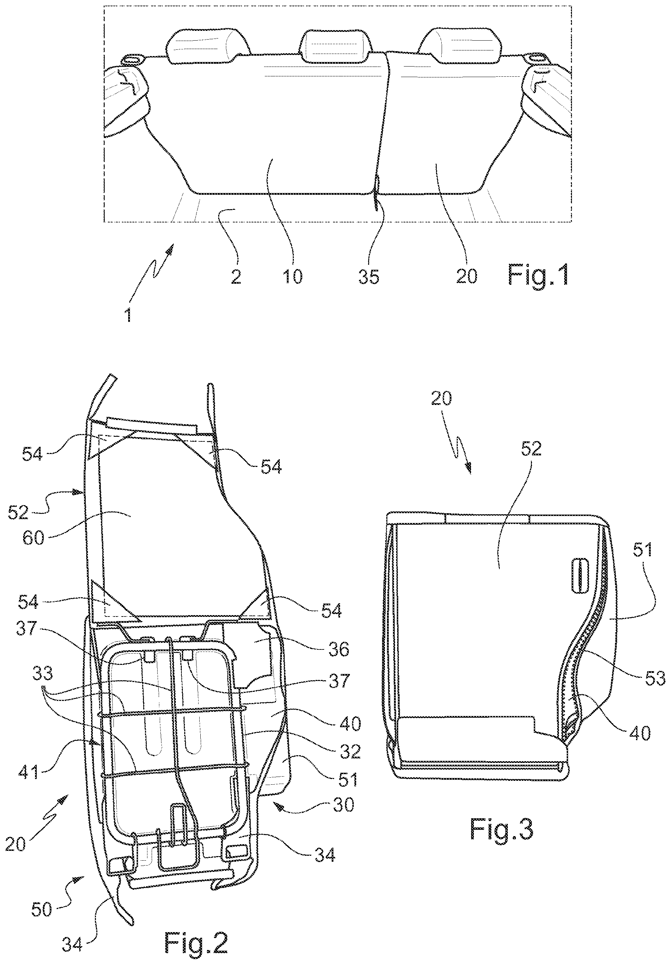

La figure 1 montre une banquette arrière 1 de véhicule automobile, par exemple de rang deux, montée sur le plancher 2 de ce véhicule.

La banquette 1 comporte deux dossiers 10, 20 disposés côte à côte dans le sens de la largeur du véhicule et présentant des dimensions différentes : le premier dossier 10 pouvant accueillir jusqu'à deux passagers représente environ 60% de la largeur totale de l'armature de banquette, tandis que le second dossier 20 destiné à recevoir le dos d'un unique passager représente environ 40% de cette même largeur.

Les deux dossiers 10, 20 sont montés articulés à pivotement, indépendamment l'une de l'autre, sur la structure du véhicule autour d'un même axe transversal.

Chaque dossier 10, 20 est ainsi apte à pivoter entre une position relevée dans laquelle il est légèrement incliné vers l'arrière par rapport à la verticale comme illustré sur la figure 1, et une position rabattue sensiblement à l'horizontale permettant d'augmenter le volume du compartiment à bagages.

On va maintenant décrire plus en détail le dossier 20 à l'appui des figures 2 et 3, sachant que le dossier 10 présente une conception semblable.

Le dossier 20 comporte une armature rigide allégée 30 dont la face avant supporte une matelassure souple 40 destinée à assurer un appui homogène et confortable du dos de l'occupant.

L'armature 30 et la matelassure 40 sont recouvertes extérieurement d'une coiffe 50 en matière textile, en cuir ou en simili en fonction du rendu souhaité.

L'armature 30 comporte un cadre rectangulaire rigide 32 formé par un tube métallique plié et dont les deux extrémités sont soudés l'une à l'autre, ainsi qu'un réseau de fils d'acier 33 s'étendant entre les deux montants et entre les deux traverses de ce cadre 32 (les extrémités de ces fils étant soudées sur les faces arrière de ces traverses et montants).

L'armature 30 comporte également deux embases d'articulation 34 fixées au niveau des deux coins inférieurs du cadre 32 et montées articulées à pivotement autour d'un axe transversal sur deux chapes 35 fixées rigidement respectivement au plancher et à la structure du véhicule (seule l'une d'entre elles étant visible sur la figure 1).

Cette armature 30 comprend en outre un dispositif d'accrochage 36 fixé en partie supérieure du montant externe du cadre 32 et prévu pour coopérer avec des moyens complémentaires disposés sur une paroi latérale correspondante de la structure du véhicule pour verrouiller le dossier 20 dans sa position relevée.

Ce dispositif d'accrochage 36 peut comprendre par exemple un crochet ou un taquet coopérant avec une gâche solidaire de la structure.

L'armature 30 comporte enfin deux tubes métalliques verticaux 37 soudés sur la face avant du montant supérieur du cadre 32 et destinés à recevoir à coulissement les deux tiges parallèles d'un appuie-tête non représenté.

La matelassure 40, obtenue par moulage à partir d'une mousse souple de mélamine ou de polyuréthanne à cellules ouvertes, présente sur sa face arrière une empreinte 41 de forme correspondante à l'armature 30 qui y est partiellement reçue.

L'empreinte 41 se prolonge verticalement vers le bas au niveau des zones de réception des deux tubes métalliques 37 de sorte que cette matelassure 40 n'interfère pas avec les tiges de l'appuie-tête lors de son coulissement.

La coiffe 50 comprend une partie avant convexe 51 épousant la forme de la face avant et des faces latérales de la matelassure 40 qu'elle enveloppe.

Cette coiffe 50 comprend également un dos plan 52 relié à la partie avant 51 par son bord inférieur et dont les bords latéraux sont fixés aux portions latérales de cette partie avant 51 au moyen d'une fermeture à glissière 53 (figure 3).

Selon l'invention et comme cela est bien visible sur la figure 2, le dossier 20 comporte en outre une plaque de rigidification 60 recouvrant la face interne du dos 52 de la coiffe 50 et étant formée en un matériau léger et économique tel que le plastique, le carton ou un composite à base de bois.

De préférence, la plaque 60 est obtenue par découpe laser ou poinçonnage à partir d'un panneau réalisé dans un plastique alvéolaire à base de polypropylène tel que l'AKILUX® propriété de la société Kaysersberg Packaging.

Cette plaque 60, qui présente avantageusement une épaisseur comprise entre 2,5 et 6 mm, s'étend sur l'ensemble de la surface du dos 52 en étant maintenue contre la face interne de ce dernier par l'intermédiaire de quatre poches triangulaires 54 en textile non tissé cousues aux quatre extrémités de la face interne du dos 52 et dans lesquelles sont insérés les quatre coins de la plaque 60.

En configuration montée du dossier 20 telle qu'illustré sur les figures 1 et 3, la face avant de cette plaque 60 vient en appui contre le réseau de fils d'acier 33 de l'armature 30, de sorte à améliorer la rigidité de la face arrière de ce dossier 20 qui s'approche alors de celle obtenue avec des dossiers dont l'armature est dotée d'une tôle métallique.

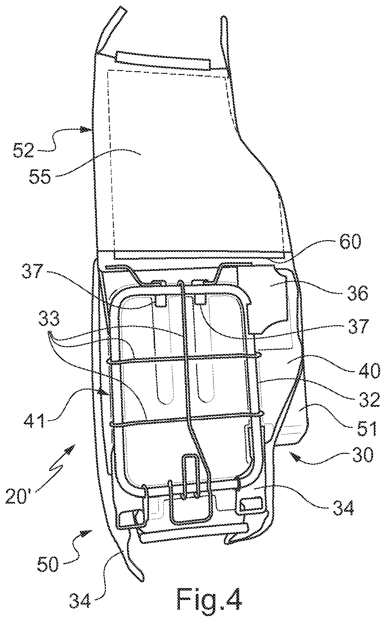

La figure 4 montre un dossier 20' conforme à un deuxième mode de réalisation de l'invention.

Le dossier 20' est semblable au dossier 20 si ce n'est que les moyens de maintien de la plaque 60 contre le dos 52 de la coiffe 50 sont différents.

Ces derniers sont ici constitués par une poche unique 55 en textile non tissé enveloppant entièrement la plaque 60 et étant cousue sur la périphérie de la face interne du dos 52.

Bien qu'ayant pour conséquence d'augmenter légèrement la masse du dossier 20, l'utilisation d'une telle poche 55 recouvrant l'intégralité de la plaque 60 permet d'éviter la génération de bruits parasites lors des micro-chocs vibratoires se produisant durant les phases de conduite du véhicule entre cette plaque et le réseau 33 de fils métalliques de l'armature 30.

Selon des variantes de réalisation non représentées, les moyens de maintien de la plaque de rigidification contre la face interne du dos de la coiffe sont encore différents.

Selon d'autres variantes de réalisation non représentées, le cadre de l'armature du dossier n'est pas forcément de forme rectangulaire tandis que le nombre et/ou l'agencement des fils métalliques de cette même armature peuvent être également différents.

On rappellera enfin que la présente invention ne se limite pas aux formes de réalisation décrites et représentées, mais qu'elle englobe toute variante d'exécution à la portée de l'homme du métier, pour autant que l'invention demeure telle que définie par les revendications.

Elle peut ainsi être notamment mise en œuvre sur l'ensemble des configurations connues de banquettes modulables à deux ou trois dossiers indépendants disposés côte à côte dans le sens de la largeur du véhicule (par exemple, de type 1/3-2/3, 40-20-40 ou bien encore 60-20-60).

## Revendications

1. Dossier de banquette arrière de véhicule automobile apte à être monté articulé à pivotement sur la structure dudit véhicule entre une position relevée et une position rabattue sensiblement à l'horizontale, ledit dossier comportant une armature (30) comprenant un cadre métallique (32) et un réseau de fils métalliques (33) s'étendant entre les deux montants et entre les deux traverses dudit cadre (32), ainsi qu'une matelassure (40) supportée par la partie avant de ladite armature (30) et une coiffe (50) recouvrant extérieurement ladite armature (30) et ladite matelassure (40) ;
comportant en outre une plaque de rigidification (60) maintenue par l'intermédiaire de moyens de maintien (54 ; 55) contre la face interne du dos (52) de ladite coiffe (50) et venant en appui contre la partie arrière de ladite armature (30), **caractérisé en ce que** lesdits moyens de maintien comportent quatre poches triangulaires (54) cousues aux quatre extrémités de la face interne du dos (52) de ladite coiffe (50) et dans lesquelles sont insérés les quatre coins de ladite plaque de rigidification (60), ou **en ce que** lesdits moyens de maintien comportent une poche unique (55) cousue sur la périphérie de la face interne du dos (52) de ladite coiffe (50) et enveloppant entièrement ladite plaque de rigidification (60).

2. Dossier de banquette arrière selon la revendication 1, **caractérisé en ce que** la ou lesdites poches (54; 55) sont réalisées dans un textile non tissé.

3. Dossier de banquette arrière selon l'une des revendications 1 ou 2, **caractérisé en ce que** ladite plaque de rigidification (60) est réalisée en plastique, en carton ou dans un matériau composite à base de bois.

4. Dossier de banquette arrière selon la revendication 3, **caractérisé en ce que** ladite plaque de rigidification (60) est réalisée dans un plastique alvéolaire.

5. Dossier de banquette arrière selon la revendication 4, **caractérisé en ce que** ladite plaque de rigidification (60) est réalisée en AKILUX®.

6. Dossier de banquette arrière selon l'une des revendications 1 à 5, **caractérisé en ce que** ladite plaque de rigidification (60) présente une épaisseur comprise entre 2,5 et 6 mm.

7. Dossier de banquette arrière selon l'une des revendications 1 à 6, **caractérisé en ce que** les extrémités des fils métalliques (33) constituant ledit réseau sont soudées sur la face arrière dudit cadre (32), et **en ce que** ladite plaque de rigidification (60) vient en appui contre lesdits fils (33).

8. Banquette arrière de véhicule automobile comportant au moins deux dossiers (10, 20) conformes à l'une des revendications 1 à 7, disposés côte à côte dans le sens de la largeur dudit véhicule.

## Patentansprüche

1. Rückenlehne einer Kraftfahrzeugrückbank, die geeignet ist, um schwenkbar an der Struktur des Fahrzeugs zwischen einer angehobenen Position und einer im Wesentlichen horizontal umgebogenen Position angebracht zu werden, wobei die Rückenlehne einen Rahmen (30), der einen Metallrahmen (32) und ein Drahtnetz (33) umfasst, das sich zwischen den beiden Säulen und zwischen den beiden Querträgern des Rahmens (32) erstreckt, sowie eine Matratze (40), die von dem vorderen Teil des Rahmens (30) getragen wird, und eine Kappe (50), die den Rahmen (30) außen abdeckt, und die Matratze umfasst, umfasst (40); ferner mit einer Versteifungsplatte (60), die über Haltemittel (54 ; 55)) gehalten ist gegen die Innenfläche des Rückens (52) der Kappe (50) und zur Anlage an dem hinteren Teil der Armatur (30), **dadurch gekennzeichnet, dass** die Haltemittel vier dreieckige Taschen (54) umfassen, die an den vier Enden der Innenfläche des Rückens (52) der Kappe (50) genäht sind und in die die vier Ecken der Versteifungsplatte (60) eingesetzt sind, oder dass die Haltemittel eine einzige Tasche (55) umfassen, die am Umfang der Innenfläche des Rückens (52) der Kappe genäht ist die Versteifungsplatte (60) vollständig umhüllt.

2. Rückenlehne nach Anspruch 1, **dadurch gekennzeichnet, dass** die Tasche oder die Taschen (54 ; 55). aus Vliesstoff hergestellt sind.

3. Rückenlehne nach einem der Ansprüche 1 bis 2, **dadurch gekennzeichnet, dass** die Versteifungsplatte (60) aus Kunststoff, Pappe oder einem Verbundwerkstoff auf Holzbasis hergestellt ist.

4. Rückenlehne nach Anspruch 3, **dadurch gekennzeichnet, dass** die Versteifungsplatte (60) aus einem Schaumkunststoff hergestellt ist.

5. Rückenlehne nach Anspruch 4, **dadurch gekennzeichnet, dass** die Versteifungsplatte (60) aus AKILUX® hergestellt ist.

6. Rückenlehne nach einem der Ansprüche 1 bis 5, **dadurch gekennzeichnet, dass** die Versteifungsplatte (60) eine Dicke zwischen 2,5 und 6 mm aufweist.

7. Rückenlehne nach einem der Ansprüche 1 bis 6, **dadurch gekennzeichnet, dass** die Enden der Metalldrähte (33), die das Gitter bilden, an der Rückseite des Rahmens (32) angeschweißt sind, und dass die Versteifungsplatte (60) an den Drähten (33) anliegt.

8. Rücksitzbank für Kraftfahrzeuge mit mindestens zwei Rückenlehnen (10, 20) nach einem der Ansprüche 1 bis 7, die in Breitenrichtung des Fahrzeugs nebeneinander angeordnet sind

## Claims

1. Rear bench seat folder of motor vehicle capable of being rotated articulated on the structure of said vehicle between a raised position and a substantially horizontal folded position, said seat back comprising an armature (30) comprising a metal frame (32) and a network of metal wire (33) extending between the two amounts and between the two traverses of said frame (32), and a maturing (4) 0) supported by the front part of said frame (30) and a cap (50) covering externally said frame (30) and said matelassure (40); further comprising a stiffening plate (60) maintained through maintenance means (54; 55) against the inner face of the back (52) of said cap (50) and supporting the rear part of said frame (30), **characterized in that** said holding means comprise four triangular pockets (54) sewn at the four ends of the inner face of the back (52) of said cap (50) and in which the four corners of the back are inserted said stiffening plate (60), or in so far as said holding means comprise a single pocket (55) sewn on the periphery of the inner face of the back (52) of said cap (50) and fully enclosing said stiffening plate (60).

2. Rear bench seat folder according to claim 1, **characterized in that** the said pocket(s) (54; 55) are made in a non-woven textile.

3. Rear bench seat folder according to one of claims 1 to 2, **characterized in that** said rigid plate (60) is made of plastic, cardboard or composite wood-based material.

4. Rear bench seat folder according to claim 3, **characterized in that** said stiffening plate (60) is made of cellular plastic.

5. Rear bench seat folder according to claim 4, **characterized in that** said stiffening plate (60) is made in AKILUX®.

6. Rear bench seat folder according to one of claims 1 to 5, **characterized in that** said rigid plate (60) has a thickness between 2,5 and 6 mm.

7. Rear bench seat folder according to one of claims 1 to 6, **characterized in that** the ends of the metal wires (33) constituting the said network are welded on the rear face of said frame (32), and that said stiffening plate (60) supports said wires (33).

8. Rear seat of motor vehicle comprising at least two dossiers (10, 20) complying with one of claims 1 to 7, arranged side by side in the direction of the width of the vehicle.
